# EUROPÄISCHE PATENTSCHRIFT

(11) **EP 0 714 178 B1**
(45) Veröffentlichungstag und Bekanntmachung des Hinweises auf die Patenterteilung: **04.09.2002**
(21) Anmeldenummer: 95117376.4
(22) Anmeldetag: 04.11.1995
(51) Int. Cl.: H04B 7/08

(54) **Mehrantennen-Scanning-Diversity-System für Fahrzeuge**
Multi-antenna scanning diversity-system for vehicles
Système de diversité multi-antennes à balayage des signaux pour véhicules

(30) Priorität: 23.11.1994 DE 4441761
(43) Veröffentlichungstag der Anmeldung: 29.05.1996
(73) Patentinhaber: FUBA Automotive GmbH & Co. KG, 31162 Bad Salzdetfurth (DE)
(72) Erfinder: Lindenmeier, Heinz, D-82152 Planegg (DE); Hopf, Jochen, D-85540 Haar (DE); Reiter, Leopold, D-82205 Gilching (DE)

(56) Entgegenhaltungen:
- DE-A- 3 618 452
- DE-A- 4 204 490
- GB-A- 2 006 578

## Beschreibung

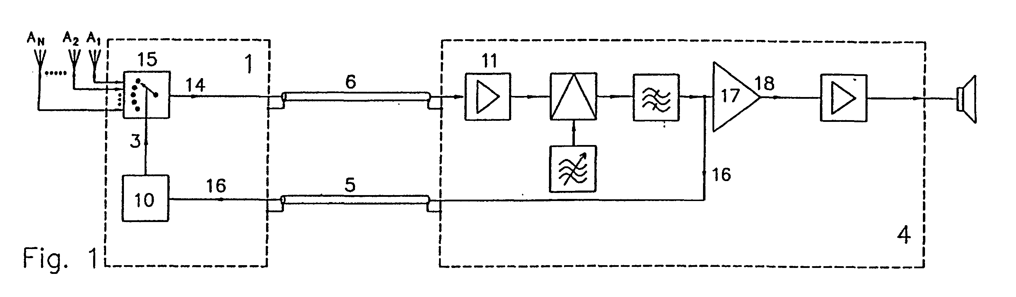

Die Erfindung geht aus von einem Mehrantennen-Scanning-Diversity-Empfangssystem zur Elimination von Empfangsstörungen nach der DE 3517247 für den Empfang im Meterwellenbereich, z.B. bei UKW. Ein Beispiel einer solchen Anlage nach dem Stande der Technik, wie sie zur Zeit in großem Umfang eingesetzt wird, ist in Fig.1 dargestellt. In dieser Diversityanlage wird eine Vielzahl von Antennen an einen Diversityprozessor angeschlossen, an dessen Eingang sich ein Antennenumschalter befindet, welcher bei Feststellung von Empfangsstörungen des zum Empfänger durchgeschalteten Signals in die nächste Stellung weitergeschaltet wird. Ein Detektor zur Feststellung von Störungen im Empfangssignal ist im Diversityprozessor untergebracht.

Befinden sich die Antennen im Verhältnis zu den geometrischen Abmessungen der Antennenanlage weit entfernt vom Empfänger, so ist es zur Vermeidung der Vielfalt von Hochfrequenzleitungen zum Empfänger zweckmäßig, den Diversityprozessor nicht im Empfänger unterzubringen, sondern in der Nähe der Antennenanlage. Besonders bedeutsam ist dies z.B. bei Kraftfahrzeugen, auf deren Heckscheibe ein Mehrantennensystem aufgebracht ist und somit nur eine das Empfangssignal führende Hochfrequenzleitung vom Diversityprozessor zum Empfänger im Frontbereich des Fahrzeugs notwendig ist. Um im DiversityProzessor die Empfangsqualität des Empfangssignals feststellen zu können, ist jedoch bei einer derartigen Anordnung nach DE-A-40204490 eine Signalverbindung für das ZF-Signal des Empfängers zum Diversityprozessor notwendig. Diese ZF-Signalverbindung bedingt jedoch zusätzliche Kosten für Steckverbindungen, die Kosten für die ZF-Leitung und deren Verlegung im Kraftfahrzeug. Außerdem wirken sich die Steckerverbindungen als zusätzliche Fehlerquellen des Systems aus, welche die Betriebssicherheit stark herabmindern.

Zusätzlich wird bei der zuletzt genannten Anordnung entweder die das Empfangssignal führende oder die das ZF-Signal führende Leitung noch für eine weitere Verbindung zwischen Diversityprozessor und Empfänger genutzt, die zur Unterdrückung der im Antennenumschalter des Diversityprozessors beim Umschalten auftretenden im Empfänger unter Umständen hörbaren Schaltgeräusche mittels einer Stummschaltung dient. Die Entkopplung zwischen diesen Stummschaltsignalen und den auf der betroffenen Leitung vorhandenen HF-bezw. ZF-Signalen wird durch je eine Signalweiche im Diversityprozessor und im Empfänger erreicht.

Aufgabe eines Empfangsantennen-Diversitysystems nach dem Oberbegriff des Anspruchs 1 ist es deshalb, für die Übertragung der hochfrequenten Empfangssignale und der zwischenfrequenten Signale zwischen dem Diversity-Prozessor 1 und dem Empfänger 4 mit nur einer Hochfrequenzleitung auszukommen.

Neben dem Gesichtspunkt der Kostenvermeidung und der Erhöhung der Betriebssicherheit durch Wegfall zusätzlicher Steckverbindungen bietet die Erfindung den Vorteil der Kompatibilität der für den Einbau der Antennenanlage notwendigen Kabel-Vorrüstung des Fahrzeugs. Zum Beispiel kann - unabhängig von der geplanten Ausstattung des Fahrzeugs mit einer aktiven UKW-Einzelantenne auf der Heckfensterscheibe oder einem UKW-Antennendiversitysystem auf dieser Fensterscheibe - das Fahrzeug mit nur einer Hochfrequenzleitung vorgerüstet werden. Durch Austauschen des Empfängers und der im Bereich der Heckfensterscheibe angebrachten elektronischen Komponenten für die aktiven Antennen bzw. den Diversity-Prozessor kann das Fahrzeug ohne großen Montageaufwand - ausgehend vom System mit Einzelantenne - in ein Mehrantennen-Scanning-Diversity-Empfangssystem umgerüstet werden.

Die Erfindung wird im folgenden anhand von Zeichnungen erläutert. Es zeigen:
Fig. 1: Mehrantennen-Scanning-Diversity-System nach dem Stande der Technik mit einer Leitung 6 für hochfrequente Empfangssignale und einer Leitung 5 für zwischenfrequente Signale.
Fig. 2: Diversity-System nach der Erfindung mit einer gemeinsamen elektrischen Leitung 6 zwischen dem Empfänger 4 und dem Diversity-Prozessor 1.
Fig. 3: Beispiel für eine frequenzselektive Signalweiche zur Gestaltung eines ersten Signalpfads 20 für hochfrequente Empfangssignale 14 und eines zweiten Signalpfads 21 für zwischenfrequente Signale 16.
Fig. 4: Beispielhafte Ausführung für eine frequenzselektive Signalweiche mit Sperr- bzw. Durchlaßresonanzkreisen und einer Gleich- bzw. Niederfrequenz-Stromverbindung 25 zur Übertragung von Zusatzinformationen über den zweiten Signalpfad für zwischenfrequente Signale.
Fig. 5: Beispielhafte Ausführung für richtungsselektive Signalweichen in Form von Richtkopplern.

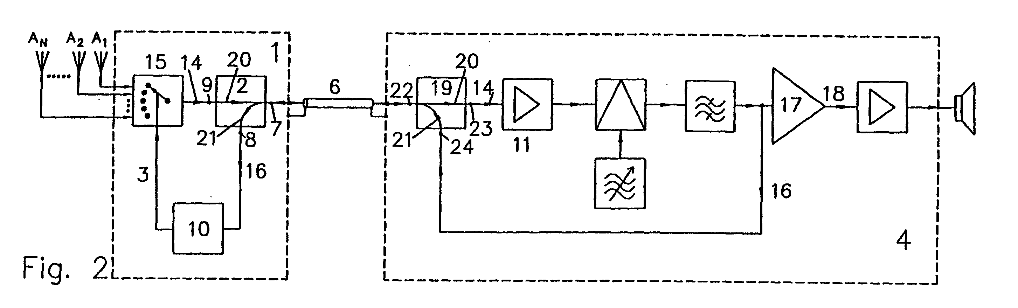

In Fig. 2 ist dem Antennenumschalter 15, welcher aus den angebotenen Antennensignalen A₁ bis A_{N} entsprechend seiner momentanen Position das empfangene Hochfrequenzsignal 14 auswählt, eine erste Signalweiche 2 nachgeschaltet, welche für die in Richtung Empfänger fließenden hochfrequenten Empfangssignale 14 durchlässig ist und die diese Signale am Ausgang des Diversity-Prozessors 1 der Hochfrequenzleitung 6 zuführt. Erfindungsgemäß befindet sich am Hochfrequenzeingang des Empfängers 4 eine zweite Signalweiche 19 mit Eingangsanschluß 22, welche für die am Ende der Leitung 6 und in Richtung zum Empfänger fließenden hochfrequenten Eingangssignale 14 einen durchlässigen ersten Signalpfad 20 enthält. Am Ausgang 23 der Signalweiche 19 ist die weiterführende Empfängerschaltung 11 angeschlossen. Die zwischenfrequenten Signale 16 werden aus dem ZF-Teil des Empfängers ausgekoppelt und einem weiteren Anschluß, dem ZF-Anschluß 24 der Signalweiche 19 zugeführt. Erfindungsgemäß besitzt diese Signalweiche einen zweiten Signalpfad 21, welcher für am Anschluß 24 eingespeiste und zum Anschluß 22 der zweiten Signalweiche 19 fließenden zwischenfrequenten Signale 16 durchlässig ist.

Ebenso besitzt die erste Signalweiche 2 im Ausgang des Diversity-Prozessors 1 einen weiteren Anschluß, den ZF-Anschluß 8, wobei ein zweiter Signalpfad 21 vorhanden ist, welcher für am Eingang 7 eintretende und am Ausgang 8 austretende zwischenfrequente Signale 16 durchlässig ist. Diese Signale werden dem Detektor 10 zur Erkennung von Störungen zugeführt, welcher bei Vorliegen einer Störung den Antennenumschalter 15 weiterschaltet. Hierbei ist es erforderlich, daß die ersten und zweiten Signalpfade der Signalweichen 2 und 19 jeweils derart gestaltet sind, daß weder hochfrequente Empfangssignale in die Pfade für zwischenfrequente Signale gelangen und umgekehrt, so daß weder im Diversity-Prozessor 1 noch im Empfänger 4 durch die Doppelnutzung der Leitung 6 für die unterschiedlichen Signale Störungen auftreten.

Die Signalweichen 2 und 19 können erfindungsgemäß entweder richtungsselektiv oder frequenzselektiv oder in einer Verbindung von Frequenzselektivität und Richtungsselektivität gestaltet werden.

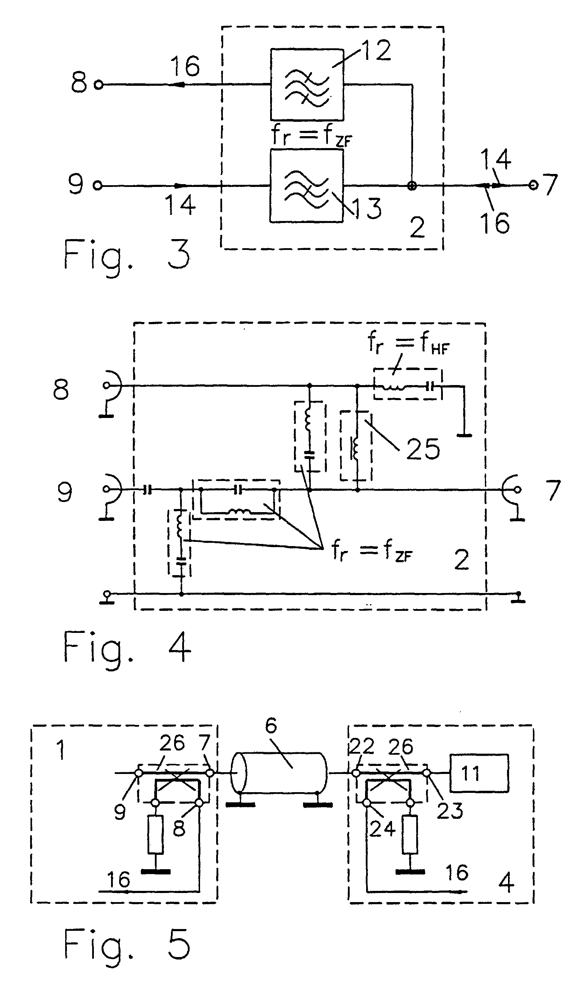

In Fig. 3 ist die beim Diversity-Prozessor befindliche Signalweiche 2 beispielhaft aus einer Kombination eines Bandpasses für das zwischenfrequente Signal 16 im zweiten Signalpfad 21 und einer Bandsperre für das zwischenfrequente Signal 16 und Durchlaß im ersten Signalweg 20 für das hochfrequente Signal 14 gestaltet.

Ein Realisierungsvorschlag dieser Filterkombination nach Fig.3 geht aus Fig. 4 hervor, indem die Pfade dadurch gestaltet sind, daß für die zwischenfrequenten Signale (f_{ZF}) sperrende und durchlassende Resonanzkreise (fᵣ=f_{ZF}) verwendet sind. Ein weiterer Resonanzkreis (fᵣ=f_{HF}), welcher als Saugkreis (fᵣ=f_{HF}) für die hochfrequenten Eingangssignale gestaltet ist, schützt den Pfad für zwischenfrequente Signale vor hochfrequenten Empfangssignalen am Anschluß 8. Die gesamte Filteranordnung ist derart gestaltet, daß sie Signale im Frequenzbereich der Lang-und Mittelwellen nicht sperrt. Mit Hilfe einer hierfür hinreichend groß gewählten Induktivität 25 kann über den Anschluß 7 zur Hochfrequenzleitung 6 eine Zusatzinformation zum Empfänger übertragen werden. Die Zusatzinformation kann durch unterschiedliche Gleichspannungspegel am Anschluß 8 zum Empfänger geliefert werden. Hierbei gilt jedoch als Bedingung, daß bei digitalen Änderungen dieses Pegels am Anschluß 8 im transienten Vorgang keine spektralen Anteile im Frequenzbereich der zwischenfrequenten und hochfrequenten Signale entstehen, welche den Betrieb stören könnten.

Solche Zusatzinformationen können z.B. darin bestehen, daß am Anschluß 8 während des Umschaltens des Antennenumschalters 15 ein Puls eingespeist wird, welcher über die Leitung 6 dem Empfänger 4 zugeführt wird und z.B. im Niederfrequenzteil des Empfängers während des Umschaltvorgangs am Antennenumschalter 15 eine Stummschaltung bewirkt, so daß der Umschaltvorgang keine hörbaren Störungen hervorrufen kann.

In einer weiteren vorteilhaften Ausgestaltung der Erfindung kann die unterschiedliche Laufrichtung der hochfrequenten Empfangssignale 14 und der zwischenfrequenten Signale 16 auf der Hochfrequenzleitung 6 zur Trennung der Signale in den Signalweichen 2 und 19 mit Hilfe von Richtkopplern 26 nach Fig. 5 ausgenützt werden.

## Patentansprüche

1. Mehrantennen-Scanning-Diversity-System mit einem Diversity-Prozessor (1), dem eingangsseitig die hochfrequenten Empfangssignale (Al bis AN) mehrerer Antennen zugeführt sind und der einen Antennenumschalter (15), eine erste Signalweiche (2) und einen Detektor (10) zur Erkennung von Empfangssignalstörungen enthält, ferner mit einem eine zweite Signalweiche (19) und ein Zwischenfrequenzteil aufweisenden, fern dem Diversity-Prozessor (1) angebrachten Empfänger (4), desweiteren mit einer Hochfrequenz-Leitung (6), die den Ausgang des Diversity-Prozessors (1) mit einer Anschlußstelle (22) des Empfängers (4) verbindet, wobei auf einem ersten Signalpfad (20) das vom Antennenumschalter (15) ausgewählte Antennensignal (14) über die erste Signalweiche (2), die Hochfrequenz-Leitung (6) und die zweite Signalweiche (19) zum Zwischenfrequenzteil des Empfängers (4) geführt ist, und wobei auf einem zweiten Signalpfad (21) ein vom Zwischenfrequenzteil des Empfängers (4) abgeleitetes Zwischenfrequenzsignal (16) vom Empfänger (4) zu dem im Diversity-Prozessor (1) enthaltenen Detektor (10) zugeführt ist, wobei bei Vorliegen ungünstiger Empfangsbedingungen ein Schaltsignal (3) vom Detektor (10) erzeugt wird und dem Antennenumschalter (15) zum Umschalten auf ein anderes Antenntensignal zugeführt wird, **dadurch gekennzeichnet, daß** der zweite Signalpfad (21) im Empfänger (4) zu einem für die Zwischenfrequenzsignale (16) bestimmten Anschluß (24) der zweiten Signatweiche (19), sodann über den mit der Hochfrequenz-Leitung (6) verbundenen Anschluß der zweiten Signalweiche (19) über die Hochfrequenz-Leitung (6) zu dem mit dieser verbundenen Anschluß (7) der ersten Signalweiche (2) im Diversity-Prozessor (1) und schließlich über den für die Zwischenfrequenz-Signale (16) bestimmten Anschluß (8) der ersten Signalweiche (2) zum Detektor (10) geführt ist, daß durch Selektionsmaßnahmen in der ersten Signalweiche (2) sowie in der zweiten Signalweiche (19) sichergestellt ist, daß der erste Signalpfad (20) für zwischenfrequente Signale (16) und der zweite Signalpfad (21) für die empfangenen HF-Signale (14) gesperrt ist.

2. Mehrantennen-Scanning-Diversity-System nach Anspruch 1,
**dadurch gekennzeichnet, daß** mindestens eine der beiden Signalweichen frequenzselektiv gestaltet ist und der erste Signalpfad (20) durch Frequenzfilter für hochfrequente Empfangssignale (14) durchlässig und für zwischenfrequente Signale (16) sperrend gestaltet ist und der zweite Signalpfad (21) durch Frequenzfilter für zwischenfrequente Signale (16) durchlässig und für hochfrequente Empfangssignale (14) sperrend gestaltet ist.

3. Mehrantennen-Scanning-Diversity-System nach Anspruch 1 und 2,
**dadurch gekennzeichnet, daß** die beiden Signalweichen nur ZF-frequenzsperrende (13) und ZFfrequenzdurchlässige (12) Filter enthalten.

4. Mehrantennen-Scanning-Diversity-System nach Anspruch 1,
**dadurch gekennzeichnet, daß** mindestens eine der beiden Signalweichen richtungsselektiv durch Richtkoppler (26) gestaltet ist und der erste Signalpfad (20) nur für in Richtung Empfänger fließende und somit nur für hochfrequente Empfangssignale (14) durchlässig ist und für die in Richtung Diversity-Prozessor fließenden zwischenfrequenten Signale (16) sperrend gestaltet ist und der zweite Signalpfad (21) nur für in Richtung Diversity-Prozessor fließende und somit nur für zwischenfrequente Signale (16) durchlässig ist und für die in Richtung Empfänger fließenden hochfrequenten Empfangssignale (14) sperrend gestaltet ist.

5. Mehrantennen-Scanning-Diversity-System nach Anspruch 2 bis 4,
**dadurch gekennzeichnet, daß** mindestens eine der beiden Signalweichen richtungsselektiv durch Richtkoppler (26) gestaltet und zur Unterstützung der Selektionseigenschaften zusätzlich frequenzselektiv gestaltet ist.

6. Mehrantennen-Scanning-Diversity-System nach Anspruch 2,
**dadurch gekennzeichnet, daß** der zweite Signalpfad (21) der Signalweichen ein für niedrige Frequenzen durchlässisges Koppelelement zur Übertragung zusätzlicher Informationen zwischen dem ZF-Anschluß (8) der ersten Signalweiche (2) über die elektrische Leitung (6) zum ZF-Anschluß (24) der zweiten Signalweiche (19) enthält.

7. Mehrantennen-Scanning-Diversity-System nach Anspruch 6,
**dadurch gekennzeichnet, daß** das Koppelelement als Induktivität (25) realisiert ist, welche im LMK-Frequenzbereich hochohmig gewählt ist.

## Claims

1. Multi-antenna scanning diversity system with a diversity processor (1) to which the high-frequency incoming signals (A1 to AN) of a plurality of antennas are supplied at the input end and which contains an antenna change-over switch (15), a first signal band separator (2) and a detector (10) for detecting incoming signal faults, and also with a second signal band separator (19) and a receiver (4) mounted on the diversity processor (1) and having an intermediate frequency section, and also a high frequency line (6) which connects the output of the diversity processor (1) to a terminal (22) of the receiver (4), while on a first signal path (20) the antenna signal (14) selected by the antenna change-over switch is fed to the intermediate frequency section of the receiver (4) via the first signal band separator (2), the high frequency line (6) and the second signal band separator (19), and on a second signal path (21) an intermediate frequency signal (16), derived from the intermediate frequency section of the receiver (4), is fed from the receiver (4) to the detector (10) contained in the diversity processor (1), while in the event of unfavourable reception conditions a switching signal (3) is generated by the detector (10) and is fed to the antenna change-over switch (15) to switch it to a different antenna signal, **characterised in that** the second signal path (21) in the receiver (4) is guided to a port (24) of the second signal band separator (19) intended for the intermediate frequency signals (16), then via the port of the second signal band separator (19) connected to the high frequency line (6), via the high frequency line (6) to the port (7) of the first signal band separator (2) in the diversity processor (1) connected thereto, and finally via the port (8) of the first signal band separator (2) intended for the intermediate frequency signals (16) to the detector (10), **in that** selection means in the first signal band separator (2) and in the second signal band separator (19) ensure that the first signal path (20) is blocked to intermediate-frequency signals (16) and the second signal path (21) is blocked to the incoming HF signals (14).

2. Multi-antenna scanning diversity system according to claim 1, **characterised in that** at least one of the two signal band separators is designed to be frequency-selective and the first signal path (20) is transmissive to high-frequency incoming signals (14) through frequency filters and is blocked to intermediate-frequency signals (16) and the second signal path (21) is transmissive to intermediate-frequency signals (16) through frequency filters and is blocked to high-frequency incoming signals (14).

3. Multi-antenna scanning diversity system according to claims 1 and 2, **characterised in that** the two signal band separators contain only filters (13) which block IF-frequency and filters (12) which are transmissive to IF-frequency.

4. Multi-antenna scanning diversity system according to claim 1, **characterised in that** at least one of the two signal band separators is designed to be directionally selective by means of directional couplers (26) and the first signal path (20) is only transmissive to incoming signals flowing in the direction of the receiver and hence only to high-frequency incoming signals (14) and is designed to block intermediate-frequency signals (16) flowing in the direction of the diversity processor, and the second signal path (21) is only transmissive to signals flowing in the direction of the diversity processor and hence only to intermediate-frequency signals (16) and is designed to block the high-frequency incoming signals (14) flowing in the direction of the receiver.

5. Multi-antenna scanning diversity system according to claims 2 to 4, **characterised in that** at least one of the two signal band separators is designed to be directionally selective by means of directional couplers (26) and is additionally frequency-selective to assist the selection properties.

6. Multi-antenna scanning diversity system according to claim 2, **characterised in that** the second signal path (21) of the signal band separators contains a coupling element, transmissive of low frequencies, for transmitting additional information between the IF connection (8) of the first signal band separator (2) via the electric lead (6) to the IF connection (24) of the second signal band separator (19).

7. Multi-antenna scanning diversity system according to claim 6, **characterised in that** the coupling element is constructed as an inductance (25) which has high impedance in the LMS-frequency range.

## Revendications

1. Système de diversité multi-antennes à balayage de signaux avec un processeur de diversité (1) qui reçoit à son entrée les signaux de réception à haute fréquence (A1 à AN) de plusieurs antennes et qui contient un commutateur d'antenne (15), un premier séparateur de signaux (2) et un détecteur (10) destiné à reconnaître les perturbations des signaux de réception, avec en outre un deuxième séparateur de signaux (19) et des récepteurs (4) présentant une partie à fréquence intermédiaire et disposés loin du processeur de diversité (1), avec en outre une ligne à haute fréquence (6) reliant la sortie du processeur de diversité (1) avec un point de connexion (22) du récepteur (4), le signal d'antenne (14) sélectionné par le commutateur d'antenne (15) étant acheminé sur un premier trajet de signal (20) en passant par le premier séparateur de signaux (2), la ligne à haute fréquence (6) et le deuxième séparateur de signaux (19) jusqu'à la partie à fréquence intermédiaire du récepteur (4), et un signal de fréquence intermédiaire (16) tiré de la partie de fréquence intermédiaire du récepteur (4) étant acheminé sur un deuxième trajet de signal (21) du récepteur (4) au détecteur (10) contenu dans le processeur de diversité (1), un signal de commutation (3) étant produit par le détecteur (10) si les conditions de réception sont mauvaises et transmis au commutateur d'antenne (15) pour le faire commuter sur un autre signal d'antenne, **caractérisé en ce que** le deuxième trajet de signal (21) dans le récepteur (4) est amené à une connexion (24) du deuxième séparateur de signaux (19) destinée aux signaux de fréquence intermédiaire (16) puis, par la connexion du deuxième séparateur de signaux (19) reliée à la ligne à haute fréquence (6) et en passant par la ligne à haute fréquence (6), à la connexion (7) du premier séparateur de signaux (2) reliée à celle-ci dans le processeur de diversité (1), et enfin, par la connexion (8) du premier séparateur de signaux (2) destiné aux signaux de fréquence intermédiaire (16), jusqu'au détecteur (10), **en ce que** des mesures de sélection dans le premier séparateur de signaux (2) et le deuxième séparateur de signaux (19) assurent que le premier trajet de signal (20) est barré aux signaux à fréquence intermédiaire (16) et le deuxième trajet de signal (21) aux signaux HF (14) reçus.

2. Système de diversité multi-antennes à balayage de signaux selon la revendication 1, **caractérisé en ce que** l'un au moins des deux séparateurs de signaux est conçu de manière sélective en fonction de la fréquence et le premier trajet de signal (20) laisse passer les signaux de réception à haute fréquence (14) grâce à des filtres de fréquence et arrête les signaux de fréquence intermédiaire (16) et le deuxième trajet de signal (21) laisse passer le signaux de fréquence intermédiaire (16) grâce à des filtres de fréquence et arrête les signaux de réception à haute fréquence (14).

3. Système de diversité multi-antennes à balayage de signaux selon les revendications 1 et 2, **caractérisé en ce que** les deux séparateurs de signaux ne contiennent que des filtres bloquant les fréquences intermédiaires (13) et laissant passer les fréquences intermédiaires (12).

4. Système de diversité multi-antennes à balayage de signaux selon la revendication 1, **caractérisé en ce que** l'un au moins des séparateurs de signaux est conçu de manière sélective en fonction de la direction grâce à des coupleurs directionnels (26) et le premier trajet de signal (20) laisse passer uniquement les signaux allant en direction du récepteur et, de ce fait, uniquement les signaux de réception à haute fréquence (14) et arrête les signaux de fréquence intermédiaire (16) allant en direction du processeur de diversité, et le deuxième trajet de signal (21) ne laisse passer que les signaux allant vers le processeur de diversité et par conséquent à fréquence intermédiaire (16) et arrête les signaux de réception à haute fréquence (14) allant vers le récepteur.

5. Système de diversité multi-antennes à balayage de signaux selon les revendications 2 à 4, **caractérisé en ce que** l'un au moins des séparateurs de signaux est conçu de manière sélective en fonction de la direction grâce à des coupleurs directionnels (26) et également conçu de manière sélective en fonction de la fréquence afin de renforcer ses capacités de sélection.

6. Système de diversité multi-antennes à balayage de signaux selon la revendication 2, **caractérisé en ce que** le deuxième trajet de signal (21) des séparateurs de signaux contient un élément de couplage laissant passer les basses fréquences en vue de la transmission d'informations complémentaires entre la connexion à fréquence intermédiaire (8) du premier séparateur de signaux (2) et la ligne électrique (6) menant à la connexion à fréquence intermédiaire (24) du deuxième séparateur de signaux (19).

7. Système de diversité multi-antennes à balayage de signaux selon la revendication 6, **caractérisé en ce que** l'élément de couplage est réalisé sous la forme d'une inductance (25) de valeur ohmique élevée dans la plage de fréquences GO/MO/PO.
